# EUROPÄISCHE PATENTSCHRIFT

(11) **EP 2 223 844 B1**
(45) Veröffentlichungstag und Bekanntmachung des Hinweises auf die Patenterteilung: **16.05.2012**
(21) Anmeldenummer: 09179399.2
(22) Anmeldetag: 16.12.2009
(51) Int. Cl.: B62D 29/00, B62D 25/08

(54) **Frontendmodul für Fahrzeuge**
Front-end module for vehicles
Module avant pour véhicules

(30) Priorität: 25.02.2009 DE 102009010345
(43) Veröffentlichungstag der Anmeldung: 01.09.2010
(73) Patentinhaber: HBPO GmbH, 59552 Lippstadt (DE)
(72) Erfinder: Opperbeck, Guido, 59558 Lippstadt (DE); Schöning, Ralf, 33442 Herzebrock-Clarholz (DE); Schäfergockel, Frank, 33106 Paderborn (DE)
(74) Vertreter: Ostermann, Thomas

(56) Entgegenhaltungen:
- EP-A1- 1 036 729
- EP-A1- 1 724 185
- EP-A1- 1 849 686
- EP-A2- 1 352 810
- DE-A1- 10 051 617
- DE-A1-102005 028 834

## Beschreibung

Die Erfindung betrifft ein Frontendmodul für Fahrzeuge nach dem Oberbegriff des Patentanspruchs 1.

Aus der DE 10 2005 055 705 B4 ist ein Frontendmodul für Fahrzeuge mit einem Montageträger bekannt, der aus einem oberen Querträger, einem unteren Querträger und einem den oberen und unteren Querträger verbindenden Verbindungsträger besteht. Der Verbindungsträger umfasst zwei verbindungsstege, die in einem Abstand zueinander angeordnet sind und jeweils den oberen Querträger mit dem unteren Querträger verbinden. Der obere Querträger ist aus einem offenen Metallprofil bzw. im Querschnitt C-förmigen Metallprofil gebildet und durch Kunststoffverrippung verstärkt ausgebildet. Der untere Querträger ist als ein hohlförmiges Metallprofil ausgebildet, das aus einem C-förmigen ersten Profil und einem sich an dem freien Rand desselben anschließenden Verschlusselement besteht. Der metallische Aufbau des bekannten Frontendmoduls, der sich im Grundsatz bewährt hat, weist jedoch den Nachteil auf, dass er zur Erlangung einer erhöhten Steifigkeit ein relativ hohes Gewicht aufweisen muss.

Aus der DE 10 2006 061 522 A1 ist ein Frontendmodul für Fahrzeuge mit einem Montageträger bekannt, der einen oberen Querträger und einen unteren Querträger sowie einen den unteren und oberen Querträger verbindenden verbindungsträger aufweist. Der obere Querträger, der untere Querträger und der Verbindungsträger bestehen vollständig aus einem Kunststoffmaterial, das beispielsweise glasfaserverstärkt sein kann. Der obere Querträger besteht beispielsweise aus einem im Querschnitt winkelförmigen Kunststoffprofil. Einen die steifigkeit verbessernden Effekt bildet die Ausformung eines Hohlprofils, das als Kanal zur Leitung für eine Betriebsflüssigkeit oder Luft ausgebildet ist und das mit einem freien Ende in Richtung des Verbindungsträgers geführt ist zum Anschluss derselben. Zwar erhöhen die Betriebsmittelkanäle die Steifigkeit der Querträger in Teilbereichen. Allerdings ist die Steifigkeit insbesondere des oberen Querträgers für extreme mechanische Beanspruchungen, beispielsweise für ein Frontklappenschlossfalllast, nicht groß genug.

Aus der DE 100 51 617 A1 ist ein Frontendmodul für Fahrzeuge mit einem Montageträger bekannt ist, der zur Aufnahme einer Funktionseinheit des Fahrzeuges einen oberen Querträger, einen unteren Querträger und den oberen mit dem unteren Querträger verbindende Verbindungsträger aufweist. Der obere Querträger ist als ein Kunststoffhohlprofil ausgebildet.

Aus der EP 1 352 810 A2 ist ein Frontendmodul für Fahrzeuge bekannt, das einen Montageträger umfasst mit einem oberen Querträger, einem unterem Querträger und dieselben verbindende Verbindungsträger. Der obere Querträger ist als ein Metallhohlprofil ausgebildet, das durch extrudieren herstellbar ist.

Aufgabe der vorliegenden Erfindung ist es daher, ein Frontendmodul für Fahrzeuge mit einem Montageträger derart weiterzubilden, dass die Steifigkeit für die Aufnahme von Kräften bei extremen mechanischen Beanspruchungen (z. B. Frontklappenschlossfalllast) erhöht wird, wobei der Montageträger ein möglichst geringes Gewicht aufweist.

Zur Lösung dieser Aufgabe weist die Erfindung die Merkmale des Patentanspruchs 1 auf.

Der besondere Vorteil der Erfindung besteht darin, dass die Stabilität und Steifigkeit insbesondere eines oberen Querträgers so verbessert werden kann, dass der ausschließlich aus einem Kunststoffmaterial hergestellte Querträger langzeitstabil extreme mechanische Stoßbelastungen (Frontklappenschlossfalllast) aufnehmen kann. Grundgedanke der Erfindung ist es, zumindest den oberen Querträger quasi vollständig als ein rohrförmiges Kunststoffhohlprofil auszubilden, so dass eine verbesserte Bauteilsteifigkeit gegeben ist. Dadurch, dass der obere Querträger und der untere Querträger komplett aus einem Kunststoffmaterial gefertigt sind, weist der Montageträger ein relativ geringes Gewicht auf. Nach der Erfindung ist das Kunststoffhohlprofil als ein mittels eines Fluids ausgeformtes Spritzgießteil ausgebildet, so dass auf herstellungstechnisch einfache weise mittels Gasinnendruck-Spritzgießen oder Wasserinnendruck-Spritzgießen der Querträger hergestellt werden kann. Nach der Erfindung weist das als Hohlkammer ausgebildete Kunststoffhohlprofil außenseitig bereichsweise Verstärkungsrippen auf, die die Steifigkeit des Hohlkammerprofils erhöhen. Beispielsweise können sich die Verstärkungsrippen platzsparend zwischen zwei zueinander tangential von dem Hohlkammerprofil abragenden Längsflächen erstrecken.

Nach einer Weiterbildung der Erfindung weist die Hohlkammer eine solche Quererstreckung auf, dass das hierdurch gebildete Widerstandsmoment größer ist als ein vorgegebener Schwellwert. Durch eine relativ große Quererstreckung der Hohlkammer kann insbesondere die Steifigkeit in Bezug auf Stoßbelastungen erhöht werden, ohne dass eine wesentliche Gewichtszunahme eintritt.

Nach einer weiterbildung der Erfindung ist die Hohlkammer im Querschnitt kreisringförmig ausgebildet. Sie weist hierdurch eine einfache geometrische Form auf, die einfach herstellbar ist. Das Widerstandsmoment des Hohlkammerprofils kann durch Wahl eines entsprechenden Außendurchmessers bzw. einer wandstärke oberhalb eines vorgegebenen Schwellwertes gewählt werden.

Nach einer Weiterbildung der Erfindung kann das Kunststoffhohlprofil als ein Mehrkammer-Kunststoffhohlprofil ausgebildet sein, dass mehrere miteinander verbundene Hohlkammer umfasst, wobei die Hohlkammern parallel zueinander verlaufen. Bei dieser Ausführungsform ist die Quererstreckung bzw. der Außendurchmesser der einzelnen Hohlkammer kleiner als bei der Hohlkammer des Einkammer-Kunststoffhohlprofils. Zur Erhöhung der Steifigkeit sind die Hohlkammern des Mehrkammer-Hohlprofils über steifigkeitserhöhende Verstärkungsrippen miteinander verbunden. Durch die Verstärkungsrippen kann die Steifigkeit des Mehrkammer-Hohlprofils im Vergleich zum Einkammer-Hohlprofil erhöht werden.

Nach einer Weiterbildung der Erfindung erstreckt sich die Hohlkammer bzw. das Kunststoffhohlprofil des oberen Querträgers durchgehend von dem an einem ersten Ende desselben angeordneten ersten Befestigungspunkt zu dem an einem zweiten Ende desselben angeordneten weiteren ersten Befestigungspunkt. Vorteilhaft ist somit eine Verbindung zwischen den beiden gegenüberliegenden oberen Längsträgerenden (Kotflügelbänken) geschaffen, so dass eine Bauteilsteifigkeit über die gesamte Länge des Querträgers und nicht nur eine lokal begrenzte Bauteilsteifigkeit gewährleistet ist.

Nach einer Weiterbildung der Erfindung weist das Kunststoffhohlprofil eine Längsaufnahme auf, in der ein langgestrecktes Einlegeteil angeordnet ist, welches sich zwischen den gegenüberliegenden endseitigen ersten Befestigungspunkten des oberen Querträgers erstreckt. Vorteilhaft kann hierdurch ein Zugverbund zwischen den gegenüberliegenden und mit dem oberen Querträger verbundenen Längsträgerenden des Fahrzeugs geschaffen werden, so dass spezielle Crashanforderungen erfüllt werden können. Das Einlegeteil kann beispielsweise aus einem Glasfaserstrang, einem Drahtseil aus Aluminium oder Stahl oder aus einem Blechstreifen bestehen. Das Einlegeteil kann in der Spritzgießform mit angeformt oder umspritzt werden. Alternativ kann das Einlegeteil auch nachträglich in die Öffnung der Längsaufnahme eingesetzt werden.

Weitere Vorteile der Erfindung ergeben sich aus den weiteren Unteransprüchen.

Ausführungsbeispiele der Erfindung wird nachfolgend anhand der Zeichnungen näher erläutert.

Es zeigen:
- Figur 1: eine perspektivische Vorderansicht eines Frontendmoduls nach einer ersten Ausführungsform der Erfindung mit einem oberen Querträger, der als ein Einkammer-Kunststoffhohlprofil ausgebildet ist,
- Figur 2: eine Seitendarstellung des Frontendmoduls nach der ersten Ausführungsform,
- Figur 3: einen Querschnitt durch den oberen Querträger,
- Figur 4: eine perspektivisch Vorderansicht des Frontendmoduls nach einer zweiten Ausführungsform der Erfindung mit einem oberen Querträger, der als Mehrkammer-Kunststoffhohlprofil ausgebildet ist,
- Figur 5: eine Seitendarstellung des Frontendmoduls nach der zweiten Ausführungsform,
- Figur 6: einen Querschnitt durch den oberen Querträger des Frontendmoduls nach der zweiten Ausführungsform und
- Figur 7: einen Querschnitt durch einen als Einkammer-Kunststoffprofil ausgebildeten oberen Querträger mit einer angeformten Längsaufnahme für ein Einlegeteil zur Bildung eines Frontendmoduls nach einer dritten Ausführungsform der Erfindung.

Ein Frontendmodul 1 für Fahrzeuge ist an einer Vorderseite eines Fahrzeugs an einem nicht dargestellten Längsträger desselben befestigt. Der Längsträger kann beispielsweise als eine Kotflügelbank (Seitenteil) oder als mittlere Längsträgerenden ausgebildet sein. Das Frontendmodul 1 erstreckt sich im Wesentlichen über die gesamte Breite des Fahrzeugs und weist einen Montageträger 2 auf, der zur Aufnahme von Bauteilen (Funktionseinheit) des Fahrzeugs, beispielsweise einer Stoßfängereinheit, eines Kühlmoduls und/oder eines Scheinwerfers dient.

Der Montageträger 2 besteht aus einem oberen Querträger 3, einem unteren Querträger 4 und einem den oberen Querträger 3 mit dem unteren Querträger 4 verbindenden Verbindungsträger 5. Der Verbindungsträger 5 ist in den vorliegenden Ausführungsbeispielen als eine Verbindungsfläche ausgebildet, die an einem oberen Rand über die gesamte Länge eines Mittenabschnitts 3' des oberen Querträgers 3 verläuft. In der Mitte weist die Verbindungsfläche 5 eine Öffnung auf, damit mittels eines Ventilators Umgebungsluft in den Motorraum angesaugt werden kann. Die Verbindungsfläche 5 bildet zusammen mit dem Mittenabschnitt 3' des oberen Querträgers 3 sowie mit dem unteren Querträger 4 eine gemeinsame Erstreckungsebene E. Alternativ kann der Verbindungsträger 5 lediglich Vertikalstege oder -streben aufweisen, die den unteren Querträger 4 mit dem oberen Querträger 3 verbinden, siehe beispielsweise DE 10 2006 061 522 A1. Alternativ kann die Verbindungsfläche 5 auch in mehreren Ebenen angeordnet sein, beispielsweise Stufen oder Absätze aufweisen.

Der obere Querträger 3 weist neben dem geradlinigen Mittenabschnitt 3' zwei Endabschnitte 3" auf, die sich jeweils bogenförmig an den gegenüberliegenden Enden des Mittenabschnitts 3' zur Seite hin anschließen. An den freien Enden der Endabschnitte 3" ist jeweils ein erster Befestigungspunkt 6 angeordnet zur Verbindung des Querträgers 3 mit dem seitlich am Fahrzeug verlaufenden nicht dargestellten Längsträger desselben. Eine zusätzliche Befestigung des Montageträgers 2 mit dem Längsträger des Fahrzeugs erfolgt an einem zweiten Befestigungspunkt 7, der an gegenüberliegenden Vertikalrandseiten der Verbindungsfläche 5 angeordnet ist.

Der untere Querträger 4 ist aus einem rohrförmigen Kunststoffhohlprofil gebildet, das im Querschnitt kreisringförmig ausgebildet ist und eine durchgehende Hohlkammer 8 aufweist, die sich zwischen gegenüberliegenden Enden 9 des unteren Querträgers 4 erstreckt. Der untere Querträger 4 ist somit als ein Einkammer-Kunststoffhohlprofil ausgebildet.

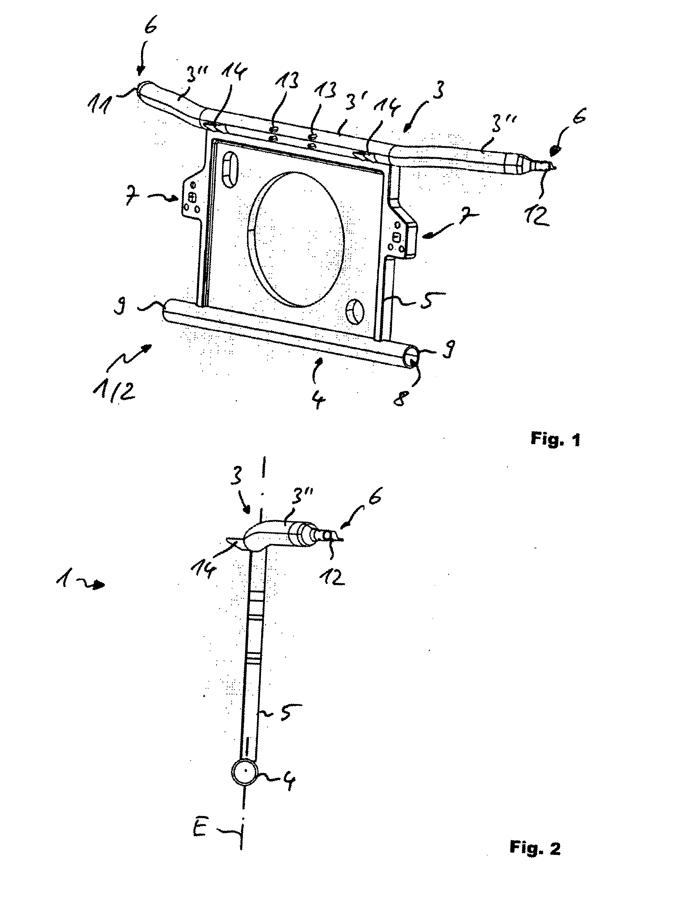

Der obere Querträger 3 ist - wie der untere Querträger 4 - nach einer ersten Ausführungsform der Erfindung gemäß den Figuren 1 bis 3 ebenfalls als ein Einkammer-Kunststoffhohlprofil ausgebildet, wobei sich eine Hohlkammer 10 durchgehend von dem ersten Befestigungspunkt 6 an einem ersten Ende 11 zu dem ersten Befestigungspunkt 6 an dem zweiten Ende 12 des oberen Querträgers 3 erstreckt. Die Hohlkammer 10 erstreckt sich somit durchgehend durch den Mittenabschnitt 3' sowie im Wesentlichen durch die Endabschnitte 3" des oberen Querträgers 3.

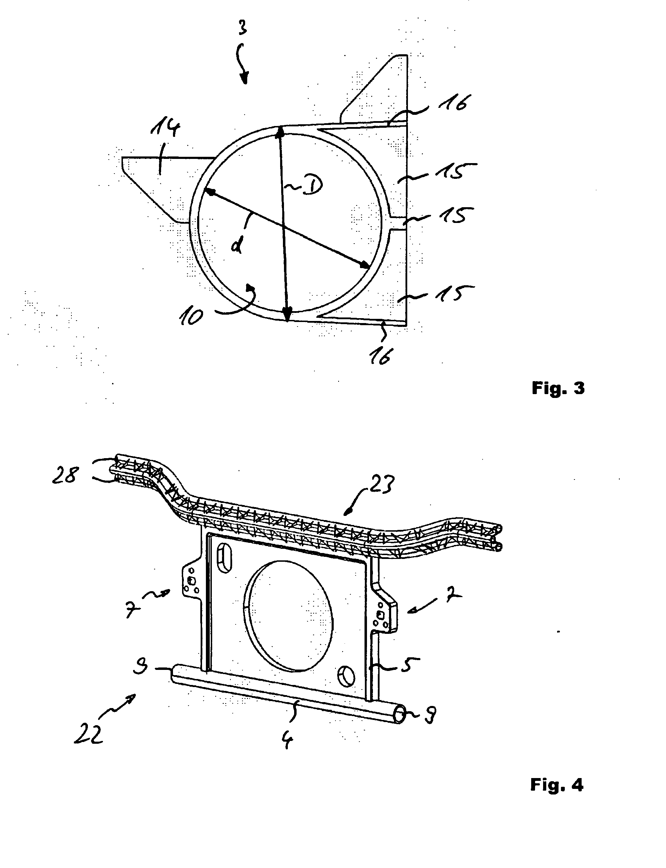

Wie aus Figur 3 ersichtlich ist, weist die Hohlkammer 10 einen solchen Außendurchmesser D und einen solchen Innendurchmesser d auf, dass ein Widerstandsmoment gebildet wird, das größer ist als ein vorgegebener Schwellwert. Hierdurch ist gewährleistet, dass der obere Querträger 3 eine ausreichende Steifigkeit aufweist, so dass mechanische Stoßbelastungen infolge des Herunterschwenkens einer Motorklappe des Fahrzeugs dauerhaft aufgenommen werden können. In der Figur 1 ist ersichtlich, dass von dem Mittenabschnitt 3' Befestigungsmittel 13 abragen zur Befestigung eines Frontklappenschlosses, in dem ein Riegelelement der Motorhaube verriegelt wird, wobei das nicht dargestellte Frontklappenschluss in unmittelbarer Nähe zu dem oberen Querträger 3 angeordnet ist.

Wie aus den Figuren 1 und 2 ersichtlich ist, ragen von dem Mittenabschnitt 3' weitere Befestigungsmittel 14 ab zur Befestigung von Anbauteilen an dem Montageträger 2, wie beispielsweise Scheinwerfer, Stoßfängerüberzüge, Signalhörner.

Zur Erhöhung der Steifigkeit des oberen Querträgers 3 erstrecken sich auf einer Längsseite des Mittenabschnitts 3' und/oder des Endabschnitts 3" Verstärkungsrippen 15, die im Wesentlichen zwischen zwei zueinander beabstandeten und tangential von der Hohlkammer 10 abragenden Längsflächen 16 verlaufen. Die Verstärkungsrippen 15 können beispielsweise rautenförmige Segmente bilden, die sich in Längsrichtung des oberen Querträgers 3 erstrecken. Die Verstärkungsrippen 15 der rautenförmigen Segmente laufen vorzugsweise spitz auf die gegenüberstehenden Längsflächen 16 zu.

Nach einer nicht dargestellten alternativen Ausführungsform können die Verstärkungsrippen 15 auch derart miteinander verbunden sein, dass wabenförmige oder prismenförmige Segmente gebildet werden, die nacheinander in Längsrichtung des oberen Querträgers 3 verlaufen.

Nach einer nicht dargestellten Ausführungsform der Erfindung können der obere Querträger 3 und/oder der untere Querträger 4 auch im Querschnitt polygonförmig oder rechteckförmig oder dreieckförmig ausgebildet sein. Wesentlich ist, dass eine Hohlkammer zwischen den beiden gegenüberliegenden ersten Befestigungspunkten 6 des oberen Querträgers 3 gebildet wird.

Nach einer zweiten Ausführungsform der Erfindung gemäß den Figuren 4 bis 6 ist ein Montageträger 22 vorgesehen, der sich im Vergleich zu dem vorhergehend beschriebenen Montageträger 2 dadurch unterscheidet, dass er einen anderen profilierten oberen Querträger 23 aufweist.

Gleiche Bauteile bzw. Bauteilfunktionen der Ausführungsbeispiele sind mit den gleichen Bezugszeichen versehen.

Der obere Querträger 23 ist als ein Mehrkammer-Kunststoffhohlprofil ausgebildet, das angeordnete eine erste Hohlkammern 24, eine zweite Hohlkammer 25 und eine dritte Hohlkammer 26 umfasst, die im Querschnitt in einem Dreieck angeordnet sind. Die zweite Hohlkammer 25 und die dritte Hohlkammer 26, die sich zu beiden Seiten einer Längsmittelebene L der ersten Hohlkammer 24 in einem spitzen Winkel a erstrecken, weisen einen Außendurchmesser D2 und einen Innendurchmesser d2 auf, die größer sind als der Innendurchmesser d1 bzw. der Außendurchmesser D1 der ersten Hohlkammer 24. Die Hohlkammer 24, 25, 25 sind jeweils im Querschnitt kreisringförmig ausgebildet. Die zweite Hohlkammer 25 und die dritte Hohlkammer 26 sind in einer gemeinsamen vertikalen Ebene V angeordnet, während die erste Hohlkammer 24 in Fahrtrichtung F vor den beiden Hohlkammern 25, 26 angeordnet ist. Dadurch, dass die zweite Hohlkammer 25 und die dritte Hohlkammer 26 in vertikaler Richtung übereinander angeordnet sind, kann die auf das Frontklappenschloss wirkende Stoßbelastung infolge der herunterfallenden Motorhaube effektiver aufgenommen werden.

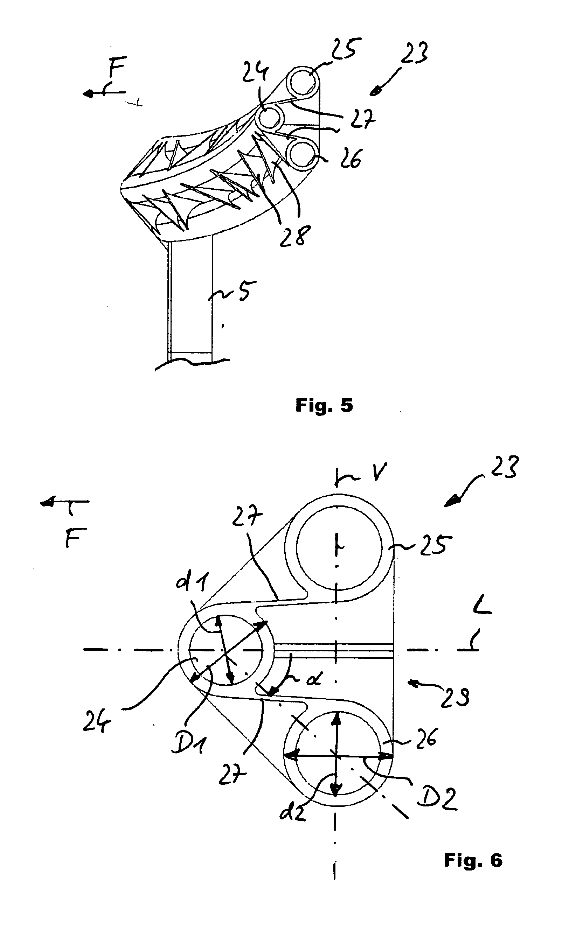

Die erste Hohlkammer 24 ist über Koppelflächen 27 einstückig mit der zweiten Hohlkammer 25 und der dritten Hohlkammer 26 verbunden. Auf einer in Fahrtrichtung F vorderen Seite der Koppelflächen 27 erstrecken sich Verstärkungsrippen 28 zwischen zueinander gekehrten Außenseiten der ersten Hohlkammer 24 einerseits und der zweiten Hohlkammer 25 bzw. dritten Hohlkammer 26 andererseits. Wie besser aus Figur 6 zu ersehen ist, weist das Mehrkammer-Kunststoffhohlprofil des ersten Querträgers 23 somit eine im Querschnitt dreieckförmige Kontur auf.

Im Bereich der Längsmittelebene L erstrecken sich vorzugsweise weitere Verstärkungsrippen 29, die zum einen eine Längsseite der ersten Hohlkammer 24 und zum anderen zueinander gekehrte Längsseiten der zweiten Hohlkammer 25 und der dritten Hohlkammer 26 miteinander verbinden. Insgesamt wird durch Vorsehen der Verstärkungsrippen 28, 29 die Steifigkeit des Mehrkammer-Hohlprofils verbessert. Im Vergleich zum ersten Ausführungsbeispiel kann bei etwa gleicher Querschnittsfläche des oberen Querträgers 23 im Vergleich zu dem oberen Querträger 3 eine erhöhte Steifigkeit erzielt werden.

Obwohl die Durchmesser d1, d2, D1, D2 der einzelnen Hohlkammer 24, 25, 26 kleiner sind als der Durchmesser D der Hohlkammer 10 kann durch die mehrfache Anordnung von Hohlkammern die Steifigkeit erhöht werden.

Nach einer nicht dargestellten alternativen Ausführungsform können auch lediglich zwei Hohlkammern oder vier oder fünf Hohlkammern vorgesehen sein.

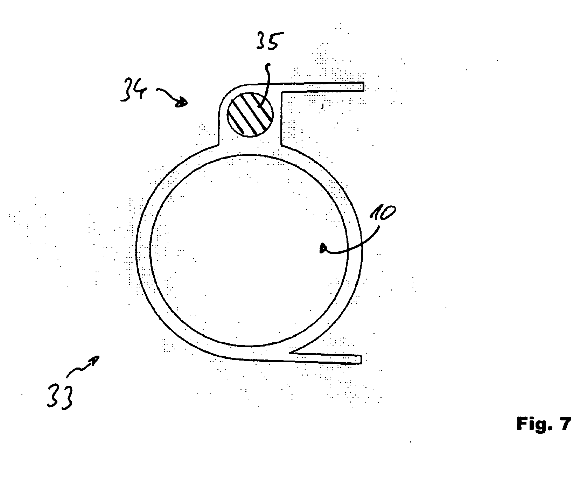

Nach einer weiteren Ausführungsform der Erfindung gemäß Figur 7 kann der obere Querträger 3 nach der ersten Ausführungsform so modifiziert werden, dass ein oberer Querträger 33 gebildet ist, an dem zusätzlich eine Längsaufnahme 34 für ein Einlegeteil 35 angeformt ist. Der obere Querträger 33 besteht im Wesentlichen aus der Hohlkammer 10 des oberen Querträgers 3, an den dessen oberem vertikalen Rand die Längsaufnahme 34 angeformt ist. Das Einlegeteil 35 erstreckt sich durchgehend entlang des oberen Querträgers 33 und ist an den gegenüberliegenden ersten Befestigungspunkten 6 mit dem Längsträger des Fahrzeugs verbunden. Hierdurch kann ein verbesserter Zugverbund zwischen den beiden gegenüberliegenden Enden der Längsträger gebildet werden, so dass erhöhte Crashanforderungen erfüllt werden. Das Einlegeteil 35 kann beispielsweise aus einem Glasfaserstrang (Verbundwerkstoff) oder aus einem Drahtseil aus Aluminium oder Stahl oder aus einem Blechstreifen bestehen. Das Einlegeteil 35 verläuft somit parallel zu der Hohlkammer 10 des oberen Querträgers 33. Auf das Vorsehen von Verstärkungsrippen kann verzichtet werden. Gegebenenfalls können zusätzliche Schraubdome oder Rippen zu Integrations- bzw. Anbindungszwecken von Bauteilen, wie z.B. Scheinwerfern, angeformt sein.

Die Längsaufnahme 34 ist im Querschnitt kreisringförmig ausgebildet und umschließt umfangsseitig das Einlegeteil 35. Alternativ kann die Längsaufnahme 34 auch im Querschnitt U-förmig oder C-förmig ausgebildet sein. Das Einlegeteil 35 kann beispielsweise in den Kanal der Längsaufnahme 34 nach Fertigstellung des oberen Querträgers 33 eingeführt bzw. eingesetzt werden. Alternativ kann das Einlegeteil 35 auch beim Herstellen des oberen Querträgers 33 umspritzt werden.

Die beschriebenen Kunststoffhohlprofile 3, 4, 23, 33 sind jeweils als ein mittels eines Fluids ausgeformtes Spritzgießteil ausgebildet. Sie werden in einer entsprechenden Form einer Spritzgießmaschine hergestellt, wobei zum Abschluss der Werkzeugfüllphase ein Gas oder eine Flüssigkeit mit einem relativ hohen Druck in den Formraum eingeführt wird, wobei das Fluid die Schmelze verdrängt und eine entsprechende Hohlkammer ausformt.

Die Verstärkungsrippen werden durch entsprechende Konturierung der Spritzgießform gebildet.

Nach den vorliegenden Ausführungsbeispielen befindet sich in den Hohlkammern lediglich Umgebungsluft.

Nach einer nicht dargestellten alternativen Ausführungsform können die Hohlkammern auch mit einem nachgiebigen und die Steifigkeit erhöhenden Füllmittel versehen werden. Das Füllmittel kann beispielsweise ein Elastomer sein, das nachträglich in den Hohlraum des oberen Querträgers 3, 23, 33 und/oder des unteren Querträgers 4 eingespritzt wird.

## Patentansprüche

1. Frontendmodul für Fahrzeuge mit einem Montageträger (2), der zur Aufnahme mindestens einer Funktionseinheit des Fahrzeugs einen oberen Querträger (3), einen beabstandet zu demselben angeordneten unteren Querträger (4) und einen den oberen Querträger (3) mit dem unteren Querträger (4) verbindenden Verbindungsträger (5) aufweist, dass der obere Querträger (3) einen Mittenabschnitt (3') und sich jeweils endseitig an den Mittenabschnitt (3') anschließende Endabschnitte (3") aufweist, dass der Verbindungsträger (5) zusammen mit dem Mittenabschnitt (3') des oberen Querträger (3) und mit dem unteren Querträger (4) zumindest bereichsweise in einer gemeinsamen Erstreckungsebene verläuft, dass an freien Enden (11, 12) der Endabschnitte (3") des oberen (3) Querträgers jeweils ein erster Befestigungspunkt (6) und an gegenüberliegenden Seiten des Verbindungsträgers (5) jeweils ein zweiter Befestigungspunkt (6) angeordnet sind zur Befestigung des Montageträgers (2) an einem in Längsrichtung des Fahrzeugs verlaufenden Längsträger, dass der Mittenabschnitt (3') und der Endabschnitt (3") des oberen Querträgers (3, 23, 33) und/oder der untere Querträger (4) als ein rohrförmiges Kunststoffhohlprofil ausgebildet sind, **dadurch gekennzeichnet, dass** das Kunststoffhohlprofil als ein mittels eines Fluids ausgeformten Spritzgießteil ausgebildet ist und dass sich außenseitig des als Hohlkammer (10) ausgebildeten Kunststoffhohlprofils bereichsweise Verstärkungsrippen (15) anschließen.

2. Frontendmodul nach Anspruch 1, **dadurch gekennzeichnet, dass** das Kunststoffhohlprofil mindestens eine in Längsrichtung derselben verlaufende Hohlkammer (8, 10) aufweist, die eine solche Quererstreckung (D) aufweist, dass ein Widerstandsmoment gebildet ist, das größer als ein vorgegebener Schwellwert.

3. Frontendmodul nach Anspruch 1 oder 2, **dadurch gekennzeichnet, dass** die Hohlkammer (8, 10) im Querschnitt kreisringförmig oder polygonförmig ausgebildet ist.

4. Frontendmodul nach einem der Ansprüche 1, bis 3, **dadurch gekennzeichnet, dass** die Verstärkungsrippen (15) sich zwischen zwei zueinander beabstandeten und tangential von der Hohlkammer (10) abragenden Längsflächen (16) erstrecken.

5. Frontendmodul nach einem der Ansprüche 1 bis 4, **dadurch gekennzeichnet, dass** die Verstärkungsrippen (15) in Längsrichtung des oberen Querträgers (3, 23, 33) rautenförmig oder wabenförmig oder prismenförmig verlaufen.

6. Frontendmodul nach einem der Ansprüche 1 bis 5, **dadurch gekennzeichnet, dass** sich die Hohlkammer (10) des oberen Querträgers (3, 23, 33) durchgehend von dem an einem ersten Ende (11) angeordneten ersten Befestigungspunkt (6) zu dem an einem zweiten Ende (12) angeordneten weiteren ersten Befestigungspunkt (6) erstreckt.

7. Frontendmodul nach einem der Ansprüche 1 bis 6, **dadurch gekennzeichnet, dass** das Kunststoffhohlprofil als ein Mehrkammer-Kunststoffhohlprofil ausgebildet, wobei mehrere einstückig miteinander verbundene Hohlkammern (24, 25, 26) in Längsrichtung des oberen Querträgers (23) verlaufen.

8. Frontendmodul nach Anspruch 7, **dadurch gekennzeichnet, dass** das Mehrkammer-Kunststoffhohlprofil (3) Hohlkammer (24, 25, 26) umfasst, wobei sich über eine Koppelfläche (27) an eine erste Hohlkammer (24) jeweils zu beiden Seiten der Längsmittelebene (L) in einem spitzen Winkel (α) zu derselben eine zweite Hohlkammer (25) und eine dritten Hohlkammer (26) anschließen.

9. Frontendmodul nach Anspruch 7 oder 8, **dadurch gekennzeichnet, dass** die Verstärkungsrippen (28, 29) zwischen von der ersten Hohlkammer (24) abragenden und beabstandet zueinander angeordneten Koppelflächen (27) und/oder zwischen zueinander gekehrten Seiten der zweiten Hohlkammer (25) und der dritten Hohlkammer (26) verlaufen.

10. Frontendmodul nach einem der Ansprüche 1 bis 9, **dadurch gekennzeichnet, dass** das Kunststoffhohlprofil eine Längsaufnahme (34) aufweist zur Aufnahme eines langgestreckten Einlegeteils (35), das sich zwischen den gegenüberliegenden ersten Befestigungspunkten (6) des oberen Querträgers (3, 23, 33) erstreckt.

11. Frontendmodul nach Anspruch 10, **dadurch gekennzeichnet, dass** die Längsaufnahme (34) im Querschnitt U- oder C-förmig oder kreisförmig ausgebildet ist und sich an einer Außenseite der Hohlkammer (10) anschließt.

12. Frontendmodul nach Anspruch 10 oder 11, **dadurch gekennzeichnet, dass** das Einlegeteil (35) aus einem Metall- oder Verbundwerkstoff besteht.

13. Frontendmodul nach einem der Ansprüche 1 bis 12, **dadurch gekennzeichnet, dass** der Verbindungsträger (5) zumindest an Enden (9) des Mittenabschnitts (3') mit dem oberen Querträger (3) verbunden ist.

14. Frontendmodul nach einem der Ansprüche 1 bis 13, **dadurch gekennzeichnet, dass** der Verbindungsträger (5) als eine verbindungsfläche ausgebildet ist.

15. Frontendmodul nach einem der Ansprüche 1 bis 14, **dadurch gekennzeichnet, dass** der Verbindungsträger (5) zwei verbindungsstege aufweist, die jeweils Enden (9) des Mittenabschnitts (3') des oberen Querträgers (3) mit dem unteren Querträger (4) verbinden.

## Claims

1. Front end module for vehicles having a amounting support (2) to accommodate at least one functional unit of the vehicle which support (2) comprises an upper cross-member (3), a lower cross-member (4) spaced from said latter and a connecting member (5) to connect the upper cross-member (4) to the lower cross-member (5) wherein said upper across-member has a mid-section (3') and end sections (3") adjacent to the ends of said mid-section (3'), wherein said connecting member (5) extends in a common extension plane together with the mid-section (3') of said upper cross-member (3) and with the lower cross-member (4) in some areas at least, wherein at free ends (11, 12) of said end sections (3") of the upper cross-member (3) there are a first fixing point (6) and at each one of opposite sides of the connecting member (5) a second fixing point (6) provided to attach the mounting support (2) to a longitudinal support member extending in a longitudinal axis of the vehicle, and wherein said mid-section (3') and the end sections (3") of the upper cross-member (3, 23, 33) and/or the lower cross-member (4) are in the form of a tubular plastic hollow profile, **characterized in that** said tubular plastic hollow profile is an injection molded part which are mold released by means of a fluid and that reinforcing ribs (15) protrude from the outside of the plastic hollow profile provided as a hollow chamber (10) in some areas thereof.

2. Front end module according to Claim 1, **characterized in that** the plastic hollow profile comprises at least one hollow chamber (8, 10) extending in a longitudinal axis thereof and having such a transversal extension (D) that a section modulus greater than a predetermined threshold value is provided.

3. Front end module according to Claim 1, or 2, **characterized in that** the hollow chamber (8, 10) is of circular or polygonal sectional shape.

4. Front end module according to any of the preceding Claims 1 to 3, **characterized in that** the reinforced ribs (15) extend between two longitudinal faces (16) that are spaced from each other and that protrude tangentially from said hollow chamber (10).

5. Front end module according to any of the preceding Claims 1 to 4, **characterized in that** the reinforcing ribs (15) extend in a rhombic, honeycombed or prismatic shape in a longitudinal axis of the upper cross-member (3, 23, 33).

6. Front end module according to any of the preceding Claims 1 to 5, **characterized in that** the hollow chamber (10) of the upper cross-member (3, 23, 33) extends from said first fixing point (6) provided on a first end (11) to another first fixing point (6) arrange on a second end (12).

7. Front end module according to any of the preceding Claims 1 to 6, **characterized in that** the plastic profile is a multi-chamber hollow profile having several integrally joined hollow chamber units (24, 25, 26) expending in a longitudinal axis of the upper cross-member (23).

8. Front end module according to Claim 7, **characterized in that** the multi-chamber plastic hollow profile (3) comprises said hollow chamber (24, 25, 26) wherein a second hollow chamber unit (25) and a third hollow chamber unit (26) are joined to a first hollow chamber unit (24) via a coupling face (27) at either side of said longitudinal mid-plane (L) under an acute angle 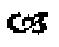 thereto.

9. Front end module according to Claim 7 or 8, **characterized in that** the reinforcing ribs (28, 29) extend between the coupling faces (27) protruding from said first hollow chamber unit (24) and spaced from each other and/or between facing sides of said second hollow chamber unit (25) and the third hollow chamber unit (26).

10. Front end module according to any of the Claims 1 to 9, **characterized in that** the plastic hollow profile has a longitudinal receiving means (34) to accommodate an elongate insert member (35) that extends between the opposing first fixing points (6) of the upper cross-member (3, 23, 33).

11. Front end module according to Claim 10, **characterized in that** said longitudinal receiving means (34) is U-shaped, C-shaped or circular in section and adjoins an outer surface of the hollow chamber (10).

12. Front end module according to Claim 10 or 11, **characterized in that** said insert member (35) is made of metal or a composite material.

13. Front end module according to any of the preceding Claims 1 to 12, **characterized in that** the connecting member (5) is joined to the upper cross-member (3) at the ends (3) of the mid-section (3') at least.

14. Front end module according to any of the preceding Claims 1 to 13, **characterized in that** the connecting member (5) is in the form of a joining face.

15. Front end module according to any of the preceding Claims 1 to 14, **characterized in that** the connecting member (5) has two connecting wexbs to join ends (9) of the mid-section (3') of the upper cross-member (3) to the lower cross-member (4).

## Revendications

1. Module avant pour véhicule, avec un support de montage (2), qui, pour la réception d'au moins une unité fonctionnelle du véhicule, présente un support transversal supérieur (3), un support transversal inférieur (4), disposées à distance l'un de l'autre, et un support de liaison (5), qui relie le support transversal supérieur (3) et le support transversal inférieur (4), sachant que le support transversal supérieur (3) est doté d'une section centrale (3') et de sections finales (3"), qui se raccordent, respectivement, aux extrémités de la section centrale (3'), que le support de liaison (5) s'étend, en commun avec la section centrale (3') du support transversal supérieur (3), au moins par section, sur un plan commun, que, pour la fixation du support de montage (2) à un support longitudinal, qui s'étend dans la direction longitudinale du véhicule, sont prévus, à chacune des extrémités libres (11, 12) des sections finales (3") du support transversal supérieur (3), un premier points de fixation (6) est, sur chacun des côtés opposés du support de liaison (5), un deuxième point de fixation (6), que la section centrale (3') et la section final (3") du support transversal supérieur (3, 23, 33) et / ou du support transversal inférieur (4) sont réalisées en tant que profilé creux en matière synthétique, en forme de tube, **caractérisé en ce que** le profilé creux en matière synthétique est réalisé en tant que pièce modulée par injection, façonnée au moyen d'un fluide, et que des nervures de renforcement (15) se raccordent, par sections, à l'extérieur du profilé creux en matière synthétique, réalisé en tant que chambre creuse (10).

2. Module avant selon la revendication 1, **caractérisé en ce que** le profile creux en matière synthétique présente au moins une chambre creuse (8, 10), qui, s'étendant dans la direction longitudinale de celui-ci, présente une dimension transversale (D) telle qu'est forme un moment résistant, qui est supérieur à une valeur de seuil prédéterminée.

3. Module avant selon revendication 1 ou 2, **caractérisé en ce que** la chambre creuse (8, 10) est réalisée avec une section transversale circulaire ou polygonale.

4. Module avant selon l'une des revendications 1 à, 3, **caractérisé en ce que** les nervures de renforcement (15) s'étendent entre deux surfaces longitudinales (16), disposées à distance l'une de l'autre et tangentiellement par rapport à la chambre creuse (10).

5. Module avant selon l'une des revendications 1 à 4, **caractérisé en ce que** les nervures de renforcement (15) s'étendent, en forme de losange ou en forme d'alvéole ou en forme de prisme, dans la direction longitudinale du support transversal (3, 23, 33).

6. Module avant selon l'une des revendications 1 à 5, **caractérisé en ce que** la chambre creuse (10) du support transversal supérieur (3, 23, 33) s'étend en continu, à partir du premier point de fixation (6), disposé à une première extrémité (11), jusqu'à l'autre premier point de fixation (6), disposé à une deuxième extrémité (12).

7. Module avant selon l'une des revendications 1 à 6, **caractérisé en ce que** le profilé creux en matière synthétique est conçu en tant que profilé creux en matière synthétique à plusieurs chambres, sachant que plusieurs chambres creuses (24, 25, 26), reliées d'une pièce les unes aux autres, s'étendent dans la direction longitudinale du support transversal supérieur (23)

8. Module avant selon la revendication 7, **caractérisé en ce que** le profilé creux en matière synthétique à plusieurs chambres (3) comprend des chambres creuses (24, 25, 26), sachant que, par l'intermédiaire d'une surface de couplage (27), une deuxième chambre creuse (25) est une troisième chambre creuse (26) se raccordent à une première chambre creuse (24), respectivement des deux côtés du plan médian longitudinal (L), en formant un angle aigu (α) par rapport à celui-ci.

9. Module avant selon revendication 7 ou 8, **caractérisé en ce que** les nervures de renforcement (28, 29) s'étendent entre des surfaces de couplage (27), disposées en saillie de la première chambre creuse (24) et à distance l'une de l'autre, et / ou entre des faces opposées de la deuxième chambre creuse (25) et de la troisième chambre creuse (26).

10. Module avant selon l'une des revendications 1 à 9, **caractérisé en ce que** le profilé creux en matière synthétique présente un réceptacle longitudinal (34), destiné à recevoir une pièce d'insertion allongée (35), qui s'étend entre les premiers points de fixation (6) du support transversal supérieur (3, 23, 33) opposés.

11. Module avant selon la revendication 10, **caractérisé en ce**
**que** le réceptacle longitudinal (34) présente une section transversale en U ou en C ou circulaire et se raccorde à une face extérieur de la chambre creuse (10).

12. Module avant selon revendication 10 ou 11, **caractérisé en ce que** la pièce d'insertion allongée (35) est en métal ou en matériau composite.

13. Module avant selon l'une des revendications 1 à 12, **caractérisé en ce que** le support de liaison (5) est relié, au moins aux extrémités (9) de la section centrale (3'), avec le support transversal supérieur (3).

14. Module avant selon l'une des revendications 1 à 13, **caractérisé en ce que** le support de liaison (5) est réalisé sous la forme d'une surface de liaison.

15. Module avant selon l'une des revendications 1 à 14, **caractérisé en ce que** le support de liaison (5) présente deux pattes de liaison, qui relient chacune des extrémités (9) de la section centrale (3') au support transversal inférieur (4).
